(19) Europäisches Patentamt
European Patent Office
Office européen des brevets

(11) **EP 3 107 268 B1**

(12) **EUROPEAN PATENT SPECIFICATION**

(45) Date of publication and mention of the grant of the patent:
**19.12.2018 Bulletin 2018/51**

(51) Int Cl.:
***H04L 12/701*** *(2013.01)*    ***H04L 29/12*** *(2006.01)*

(21) Application number: **15172177.6**

(22) Date of filing: **15.06.2015**

(54) **METHOD FOR CONFIGURING A NETWORK NODE OF A TELECOMMUNICATIONS NETWORK, TELECOMMUNICATIONS NETWORK, NETWORK NODE, PROGRAM AND COMPUTER PROGRAM PRODUCT**

VERFAHREN ZUR KONFIGURATION EINES NETZWERKKNOTENS EINES TELEKOMMUNIKATIONSNETZWERKS, TELEKOMMUNIKATIONSNETZWERK, PROGRAMM UND COMPUTERPROGRAMMPRODUKT

PROCÉDÉ POUR CONFIGURER UN NOEUD DE RÉSEAU D'UN RÉSEAU DE TÉLÉCOMMUNICATIONS, RÉSEAU DE TÉLÉCOMMUNICATIONS, NOEUD DE RÉSEAU, PROGRAMME ET PRODUIT DE PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2016 Bulletin 2016/51**

(73) Proprietor: **Deutsche Telekom AG**
**53113 Bonn (DE)**

(72) Inventors:
• **ADAMS, Martin**
**52146 Würselen (DE)**
• **SCHATZMAYR, Rainer**
**53229 Bonn (DE)**

(74) Representative: **Schwöbel, Thilo K. et al**
**Kutzenberger Wolff & Partner**
**Theodor-Heuss-Ring 23**
**50668 Köln (DE)**

(56) References cited:
• **Christoph P. Mayer, Christian Hübsch, Martin Röhricht: "Efficient In-band Service Announcement Through IPv6 Address Encoding", INTERNET ARTICLE , 31 December 2011 (2011-12-31), pages 1-2, XP002752398, Retrieved from the Internet: URL:http://telematics.tm.kit.edu/publicati ons/Files/491/ipv6-app-contest-2011-paper. pdf [retrieved on 2015-12-16]**

**Description**

BACKGROUND

The present invention relates a method for configuring a network node of a telecommunications network, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is either rejected or routed and/or forwarded and/or switched to a third network node of the plurality of network nodes of the telecommunications network.

The present invention furthermore relates to a telecommunications network for configuring a network node of a telecommunications network, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is either rejected, or routed and/or forwarded and/or switched to a third network node of the plurality of network nodes of the telecommunications network.

Additionally, the present invention relates to a network node of a telecommunications network, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is either rejected, or routed and/or forwarded and/or switched to a third network node of the plurality of network nodes of the telecommunications network,

Furthermore, the present invention relates to a program and to a computer program product for providing an enhanced routing and/or forwarding and/or switching functionality in a telecommunications network.

Packet-based data networks (or packet data networks) transmit information from a source to a destination using datagrams, each comprising a header portion and a payload portion. A typical network node or network processing device handles packets with many different protocols, although a device may not process higher-level protocols if the device merely forwards the packet.

In such packet data networks, routers analyze or classify data packets to determine whether the data packet should be rejected or routed and/or forwarded and/or switched to another network node within the telecommunications network. In many cases, the identification of data flows is a first step for providing the service of the network node. A number of network services require packet classification, e.g., for access-control, firewalls, policy-based routing, provision of integrated/differentiated qualities of service, traffic billing, secure tunnelling.

A router is multi-port network device (or network node) that can receive and transmit data packets from/to each port simultaneously. Data packets typically have regular format with uniform header structure. The header structure usually contain data fields such as address, packet type. When a packet is received from a port, the router uses the header information to determine whether a packet is discarded, logged, or forwarded. If a packet is forwarded, then the router also calculates which output port the packet will be going to. The router also accounts for the number of each type of packet passing by. The forwarding decision (where to send the packet) is typically made based on the destination address carried in the packet. In an Internet Protocol Router, forwarding typically involves at least one lookup process using matching tables. One example of a lookup process is called the Longest Prefix Match (LPM) that involves a special case of a mask matching process: The LPM uses a route table that maps a prefix rule (a mask-matching rule with all the wildcard bits located at the contiguous least significant bits) to an output port ID. By means of such processes, the network nodes, i.e. typically routers or firewalls, examine the input packets to determine if they should be rejected or routed and/or forwarded and/or switched to another network node of the telecommunications network. This is usually done with list lookups such as an Access Control List (ACL) Lookup. An ACL can be a user configurable mask-matching rule set (based on packet header fields) that categorizes certain types of traffic that may be hazardous to the network. Hence, when a data packet matches an ACL entry, the router/firewall should take action according to the ACL, e.g., to discard/log the packet, or to reject/ to route/ to forward the packet, or to alarm the network administrator.

IP addresses and masks are used to describe a certain sub-set of all possible IP addresses. The sub-sets are used for example to describe which IP addresses a router is advertising, or which IP addresses fulfil a certain security policy.

However, the bit masks used today for specifying a certain match of IP addresses (IP net masks) are typically applied on IP addresses in a rather fixed manner, i.e. applying a matching for the first n bits (or the n leftmost bits).

This typically leads to substantial efforts that can be required related to configuring, maintaining and/or updating such lookup lists, especially if a large number of entries of such lists is to be handled.

SUMMARY

An object of the present invention is to provide a technically efficient and cost effective solution for configuring a network node of a telecommunications network, especially one that is able to handle lookup list comprising a large number of entries.

The object of the present invention is achieved by a method for configuring a network node of a telecommunications network, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is

-- either rejected,
-- or routed and/or forwarded and/or switched to a third network node of the plurality of network nodes of the telecommunications network,

wherein the method comprises at least the following step:

transmitting, as part of a configuration process of the network node, routing address information comprising source address information and/or destination address information, and wherein the routing address information is, at least partly, defined based on an address information and a bit mask, the bit mask defining at least a first relevant binary digit of the routing address information and/or the address information, and a second relevant binary digit of the routing address information and/or the address information such that the first and second relevant binary digits of the bit mask are separated - within the bit mask - by at least one non-relevant binary digit of the bit mask.

It is thereby advantageously possible according to the present invention that a higher degree of flexibility can be achieved in the handling and/or masking of IP addresses by means of allowing IP net masks to be applied to parts of an IP address. According to a conventional handling of IP addresses and corresponding bit masks, especially IP net masks, only a match (or the absence of a match) based on the first bits (i.e. the leftmost) bits of an IP address is possible. However, in certain situations, it is more interesting not to be limited to indicate only the first bits (of an Internet Protocol address information), but to have a more flexible mask that indicate certain bits inside an IP address. The present invention is particularly interesting for the Terastream address concept, where certain bits in the upper part (i.e. leftmost) determine certain traffic type classes of IPv6 addresses, whereas in the lower part (i.e. right most), bits are commonly used to identify location, port or subscriber-line information.

According to the present invention, the telecommunications network comprises a plurality of network nodes and is an IP (Internet Protocol) packet data network. One network node of the plurality of network nodes provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is either rejected, or routed and/or forwarded and/or switched to a third network node of the plurality of network nodes of the telecommunications network.

According to the inventive method, the network node of the telecommunications network is configured in a far easier manner than without the present invention. Furthermore, according to the present invention, it is possible to reduce the amount of filters as certain bits can be excluded from the matching.

The method comprises at least the step of transmitting, as part of a configuration process of the network node, routing address information comprising source address information and/or destination address information, and the routing address information is, at least partly, defined based on an address information and a bit mask. The bit mask defines at least a first relevant binary digit of the routing address information and/or the address information, and a second relevant binary digit of the routing address information and/or the address information such that the first and second relevant binary digits of the bit mask are separated - within the bit mask - by at least one non-relevant binary digit of the bit mask.

According to the present invention, the network node is configured by means of data. These configuration data necessarily needs to be transmitted - in one form or the other - on or towards the considered network node (to be configured or the configuration changed, modified or updated). This data transmission towards the network node for configuration purposes does not correspond to a data transmission towards the network node for operational purposes (i.e. in operation, the router device or network node decides with respect to (operational) data packets based on the configuration data received within the network node at a time prior to the time of handling the operational data packets). In the context of the present invention, the transmission of configuration data towards the network node is also referred to by means of the wording "transmitting routing address information as part of a configuration process of the network node", i.e. as part of the configuration process, routing address information (or configuration information) are to be transmitted towards the network node, e.g. by means of using a configuration user interface, especially a graphical user interface. Hence, routing address information are arbitrary data serving for configuring the network node. In an IP (Internet Protocol) network environment where typical network nodes, router devices and/or network devices exchange data organized in IP packets (typically IPv6 packets but IPv4 packets might likewise be used), the routing and/or blocking and/or rejecting of IP packet is primarily performed based on IP addresses. Therefore, the routing address information, serving as configuration data to the network node, especially a router, necessarily also needs to comprise - or at least represents - source address information and/or destination address information, e.g. in the form of lists. These lists are getting more and more complex which leads to substantial efforts that can be required related to configuring, maintaining and/or updating such lists, especially if a large number of entries of such lists is to be handled. According to the present invention, it is advantageously possible to replace this multitude of different list entries by defining a bit mask such that by matching the bit mask with the possible source address information and/or destination address information, it is possible to generate the multitude of list entries automatically and with reduced efforts, even without any user interaction. The address information is one example of a source address information and/or a destination address information and serves as a filter that - together with the bit mask - serves to generate the list entries.

According to a preferred embodiment of the present invention, the routing and/or forwarding and/or switching operation of the network node is configurable by means of modifying the at least first and second relevant binary digits of the bit mask.

Thereby, it is advantageously possible according to the present invention that a large number of entries in a lookup table or in a lookup list (e.g. such as an ACL-list) is able to be generated or defined in a comparably easy manner, i.e. involving only one entry or one bit mask for defining a plurality of entries in the actually used lookup tables that the router, or, generally, the network node is using on an operational level.

According to a further preferred embodiment of the present invention, the at least first and second relevant binary digits of the bit mask refer to the leftmost 64 binary digits (or less than 64 binary digits, e.g., 56 or 48 binary digits) of the routing address information and/or the address information, specifying at least one out of the following: a semantic indication, a type of traffic indication, a location indication, a topology indication, and a subscriber indication.

Thereby, it is advantageously possible according to the present invention that a large number of entries in a lookup table or in a lookup list can be generated such that by means of setting or defining relevant binary digits within the bit mask, it is advantageously possible to provide a filtering based on at least one out of the following: a semantic indication, a type of traffic indication, a location indication, a topology indication, and a subscriber indication.

According to a further preferred embodiment of the present invention, the routing address information and/or the address information comprises

-- a first number of binary digits related to a type of traffic indication and/or
-- a second number of binary digits related to a router area and/or
-- a third number of binary digits related to a user or related to a port and/or
-- a fourth number of binary digits related to a user sub-network,

wherein the first and second binary digits are part of the first number of binary digits and/or of the second number of binary digits and/or of the third number of binary digits and/or of the fourth number of binary digits.

Thereby, it is advantageously possible according to the present invention that a very large number of entries of, e.g., a lookup table or a lookup list are able to be generated by means of setting or defining relevant binary digits within the bit mask in such a manner that a topological filter reflecting the topological structure of the IP network, i.e. based on binary digits related to a router area and/or related to a port and/or related to a user sub-network, is able to be realized or defined - potentially involving a huge number of individual list entries of an operational lookup table (i.e. a lookup table actually used by the network node, e.g. a router) - by a minimal number of entries or bit masks, and, at the limit with only one bit mask entry.

According to the present invention it is furthermore preferred that the first and second binary digits of the routing address information and/or the address information are part of the leftmost 64 bits of the routing address information and/or the address information.

Thereby, it is advantageously possible according to the present invention that the bitmask is used for filtering IP address base on their network prefix, i.e. the leftmost 64 bits of the IP address.

Furthermore, the present invention relates to a telecommunications network for configuring a network node of a telecommunications network, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is

-- either rejected,
-- or routed and/or forwarded and/or switched to a third network node of the plurality of network nodes of the telecommunications network,

wherein the telecommunications network is configured such that routing address information comprising source address information and/or destination address information is transmitted and/or stored in the network node as part of a configuration information, wherein the routing address information is, at least partly, defined based on an address information and a bit mask, the bit mask defining at least a first relevant binary digit of the routing address information and/or the address information, and a second relevant binary digit of the routing address information and/or the address information such that the first and second relevant binary digits of the bit mask are separated - within the bit mask - by at least one non-relevant binary digit of the bit mask.

It is thereby advantageously possible according to the present invention that a higher degree of flexibility can be achieved in the handling and/or masking of IP addresses by means of allowing IP net masks to be applied to parts of an IP address.

It is furthermore preferred according to the present invention, and especially with respect to the inventive telecommunications network, that the network nodes of the telecommunications network are, at least partly, linked by optical data transmission lines and/or by electrical or wireless data transmission lines.

Furthermore, the present invention also relates to a network node of a telecommunications network, wherein the network node is able to be configured by an inventive method, wherein the telecommunications network comprises a plurality of network nodes, wherein the telecommunications network is an IP (Internet Protocol) packet data network, wherein the network node provides a routing and/or forwarding and/or switching operation on the network layer (layer 3) according to the OSI model (Open Systems Interconnection model) such that a data packet, being an IPv6 data packet and being received by the network node from a further network node of the plurality of network nodes, is

-- either rejected,
-- or routed and/or forwarded and/or switched to a third network node of the plurality of network nodes of the telecommunications network,

wherein the network node is provided such that routing address information comprising source address information and/or destination address information is transmitted and/or stored in the network node as part of a configuration information, wherein the routing address information is, at least partly, defined based on an address information and a bit mask, the bit mask defining at least a first relevant binary digit of the routing address information and/or the address information, and a second relevant binary digit of the routing address information and/or the address information such that the first and second relevant binary digits of the bit mask are separated - within the bit mask - by at least one non-relevant binary digit of the bit mask.

Thereby, it is advantageously possible according to the present invention that a higher degree of flexibility can be achieved in the handling and/or masking of IP addresses by means of allowing IP net masks to be applied to parts of an IP address. A network node according to the present invention might be a network node located within the telecommunications network within the control of a network operator, or a network node located at an enduser premises in the form of a customer premised device and/or as a home gateway that connects user devices with the telecommunications network.

Additionally, the present invention relates to a program comprising a computer readable program code which, when executed on a computer and/or on a network node of a telecommunications network, causes the computer and/or the network node of the telecommunications network to perform a method according to the present invention.

Still additionally, the present invention relates to a computer program product for configuring a network node of telecommunications network, the computer program product comprising a computer program stored on a storage medium, the computer program comprising program code which, when executed on a computer and/or on a network node of a telecommunications network, causes the computer and/or the network node of the telecommunications network to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

BRIEF DESCRIPTION OF THE DRAWINGS

Figure 1 schematically illustrates a telecommunications network according to the present invention.

Figure 2 schematically illustrates a network node of the inventive telecommunications network.

Figure 3 schematically illustrates an example of matching a network address information (source address information or destination address information) with a predetermined filter.

DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

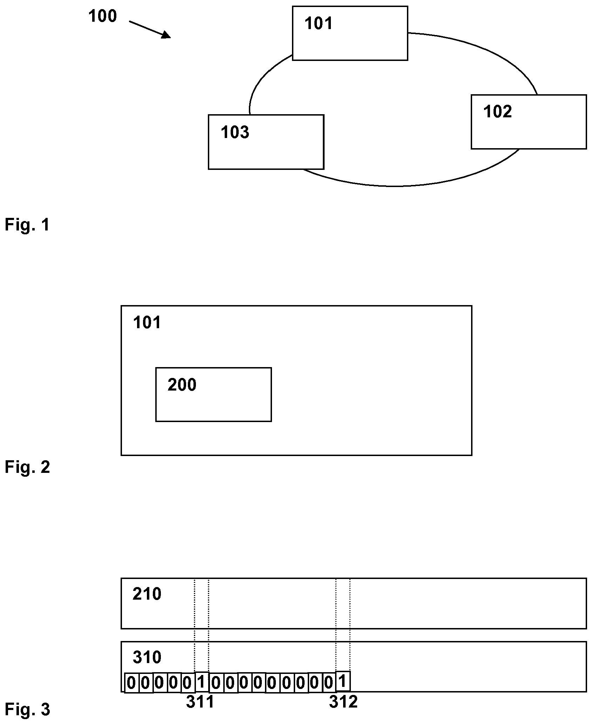

In Figure 1, a telecommunications network 100 or a part of a telecommunications network 100 according to an embodiment of the present invention is illustrated schematically. The telecommunications network 100 or the part of the telecommunications network 100 comprises a network node 101, a further network node 102, and a third network node 103. These network nodes 101, 102, 103 could also be designated by "first network node 101", "second network node 102", and "third network node 103". For the sake of simplicity, only three network nodes 101, 102, 103 of the telecommunications network 100 represented in Figure 1, however, the telecommunications network 100 might comprise a plurality of network nodes comprising far more than these network nodes.

The telecommunications network 100 is an IP (Internet Protocol) packet data network, and - at least - the (first) network node 101 provides a routing and/or forwarding and/or switching operation on the network layer (layer 3) according to the OSI model (Open Systems Interconnection model) such that a data packet, being an IPv6 data packet and being received by the network node 101 from the further network node 102, is either rejected, or routed and/or forwarded and/or switched to the third network node 103. Hence the network nodes 101, 102, 103 provide router functionality and can also be called router or router nodes of the telecommunications network 100.

Such network nodes 101, 102, 103, especially router, typically need to be configured for providing a proper functionality. According to the present invention and in order to provide for an appropriate configuration process being as simple and easy as possible, the inventive method comprises the step of transmitting, as part of the configuration process of the network node 101, routing address information 200. This is schematically represented in Figure 2, where the (first) network node 101 of the inventive telecommunications network 100 is schematically represented comprising routing address information 200 - as configuration data - typically stored in a memory device or memory functionality associated to the (first) network node 101. Of course, the (first) network node 101 is only taken (in Figure 2) as an example of one network node of the plurality of (comparable or corresponding) network nodes of the telecommunications network 100.

The configuration data, or routing address information 200, necessarily need to be transmitted on or towards the considered network node (to be configured or the configuration changed, modified or updated). According to the present invention, this data transmission towards the network node for configuration purposes does not correspond to a data transmission towards the network node for operational purposes (i.e. in operation, the router device or network node decides with respect to (operational) data packets based on the configuration data received within the network node at a time prior to the time of handling the operational data packets). According to the present invention and as part of the configuration process, routing address information (or configuration information) is transmitted towards the network node, e.g. by means of using a configuration user interface, especially a graphical user interface (GUI), or a command line interface (CLI), i.e. text based. The routing address information 200, serving as configuration data to the network node, especially a router, necessarily also needs to comprise or to represent - source address information and/or destination address information, e.g. in the form of lists.

Hence, the routing address information 200 typically comprises or represents source address information and/or destination address information, hence address information 210, which is shown in Figure 3: This figure schematically illustrates an example of matching a network address information 210 (source address information or destination address information) with a predetermined filter. The routing address information 200 is, at least partly, defined based on such address information 210 and a bit mask 310, the bit mask 310 defining at least a first relevant binary digit 311 of the routing address information 200 and/or the address information 210, and a second relevant binary digit 312 of the routing address information 200 and/or the address information 210 such that the first and second relevant binary digits 311, 312 of the bit mask 310 are separated - within the bit mask 310 - by at least one non-relevant binary digit of the bit mask 310.

According to the present invention, a set of IP filters based on bit masks can be expressed in a very efficient manner. For example, if it is assumed that an IP address has the following semantics:

-- (Leftmost) Bit 0 to bit X: an IP address prefix assigned by an authority like RIPE, or further assigned by the operator of the telecommunications network 100 to segment its IP addresses to smaller chunks;
-- Bit X+1 to bit Y: a certain amount of bits that have a semantic as indicating the type of traffic in the IP packet;
-- Bit Y+1 to last bit: a certain amount of bits that indicate location, topology information, or some form of subscriber identification.

With this exemplary schema, creating a filter on all IP packets coming from a certain area requires the following filters:

-- Bit 0 to bit X: all bits until X have to be considered (i.e. in the corresponding bit mask 310, these bits are relevant bits);
-- Bit X+1 to bit Y: all possible bit combinations (i.e. in the corresponding bit mask 310, these bits are non-relevant bits);
-- Bit Y+1 to end: the bits indicating the area being filtered.

The present invention solves the problem related with bits X+1 to Y: As all combinations should be allowed (i.e. are possible), in a traditional filter list (of a network node 101, 102, 103) a filter for each possible combination would be needed (and hence also a corresponding configuration of such a filter for each of these combination would be required). According to the present invention, it is advantageously possible to reduce the amount (or the number) of filters that would need to be configured, as certain bits can be excluded from the matching.

This shall be explained by means of the following example: Under the assumption that with respect to some address information,

-- all bits should be considered (i.e. are relevant) for bit 0 to bit X, and
-- all bits should be ignored for bit X+1 to bit Y, and
-- all bits should be considered (i.e. are relevant) for bit Y+1 to the end (of the address information), the inventive solution provides the possibility to express such a filtering option by means of a single filter mask.

Therefore, it is advantageously possible according to the present invention that efforts connected with the definition and/or the transmission of configuration information can be reduced compared to conventionally building filter lists (e.g. in order to cover all traffic type classes for a certain location/port/subscriber) resulting in comparatively long address lists.

If for example for a given address information,

-- bit 0 to bit 15 are the prefix defined by RIPE,
-- bit 16 to bit 31 indicate the type of service, and
-- bit 32 to bit 64 indicate location/port/subscriber, and
-- bit 64 to end are created by the subscriber,

a filter trying to match all IP addresses from a subscriber has to consider:

-- bit 0 to bit 15: these bits must indicate a specific number, such as a RIPE allocated prefix (e.g. 2003 as 2003 is the prefix allocated by RIPE);
-- bit 16 to bit 31: all possible bit combination. 65536 possible combinations
-- bit 32 to bit 64: subscriber identified for example by ffe1:0100;
-- bit 64 to end: all possible combinations,

i.e. resulting in at least 65536 different filter rules and address information to be transmitted, as part of the configuration data, to the network node 101 (or any further network node, such as network nodes 102 and/or 103 that needs to be configured).

According to the present invention, the definition of the filter can be as easy as:

2003:1f0b:ffe1:0100::/64 match list ffff:0000:ffff:ffff::

which is a much more concise form to express the relevant bits to be considered.

This example only shows a simple matching pattern with a single continuous sequence of bit exclusions. However, more complex and more extensive patterns, e.g. such as comprising fractional bit exclusions at any position are possible according to the present invention.

For example, in TeraStream the following IP bit pattern is used:

For the leftmost 32 bits of an address information:

```
0                   1                   2                   3
0 1 2 3 4 5 6 7!8 9 0 1 2 3 4 5!6 7 8 9 0 1 2 3!4 5 6 7 8 9 0 1!
|       REGISTRY/IANA assigned        |A A|P|I|E|M|V|S S S|R|a a
```

For the subsequent 32 bits of an address information:

```
3                   4                   5                   6
2 3 4 5 6 7 8 9!0 1 2 3 4 5 6 7!8 9 0 1 2 3 4 5!6 7 8 9 0 1 2 3
a a a a a a a a a a|p p p p p p p p p p p p|u u u u u u u u|
```

In this diagram, the following explanations apply:

"A" stands for "Address Format Identifier"; a value of "00" would, e.g., indicate BNG, a value of "01" would, e.g., indicate SD, a value of "10" would, e.g., indicate TeraStream, and a value of "11" would indicate BJ.

"P" stands for Public; a value of "0" would, e.g., indicate traffic of services internal to the operator of the telecommunications network 100, and a value of "1" would indicate traffic of services external to the operator of the telecommunications network 100.

"I" stands for Infrastructure; a value of "0" would, e.g., indicate "end user traffic", and a value of "1" would, e.g., indicate "infrastructure packet".

"E" stands for Endpoint/Service; a value of "0" would, e.g., indicate "network endpoint", and a value of "1" would indicate "service".

"M" stands for Reserved; a value of "0" would, e.g., indicate a mobile end point.

"V" stands for "L3 LPN Traffic"; "1" stands for Packet contains a L3 VPN packet, with inner destination upper 64 bit in lower 64 bit destination of outer header.

"R" stands for "Reserved".

"S" stands for service type; "0" stands for reserved, 1=internet, "2" stands for reserved, "3" stands for reserved, "4" stands for video, "5" stands for "L2 service", "6" stands for voice, "7" stands for management.

"a" stands for "R1 Area", comprises 13 bits and indicates the R1 router that the address is delegated from, max 8192 R1.

"p" stands for "R1 User", comprises 13 bits and indicates a User identifier.

"u" stands for "User subnet" which is delegated to the user.

An untagged IPv6 Internet Customer address information would, e.g. read as follows: 1010000001000000000000010000000000001....

A C-Tag Vlan Tunnel address information would, e.g. read as follows:

```
1 0 0 0 0 0 1 0 1 0 0 0 0 0 0 0 0 0 0 0 0 0 0 1 0 0 0 0 0 0 0 0 0 0 0 1 . . .
```

In such an application, the first (i.e. leftmost) 19 bits of an address information are fixed, defined by IANA/RIPE. Bits 19 to 29 are variable and contain a semantic about the address. Bits 30 to 64 indicate router/port/customer-sub-net.

**Claims**

1. Method for configuring a network node (101) of a telecommunications network (100), wherein the telecommunications network (100) comprises a plurality of network nodes (101, 102, 103), wherein the telecommunications network (100) is an IP, Internet Protocol, data network, wherein the network node (101) provides a routing and/or forwarding and/or switching operation on the network layer, layer 3, according to the OSI model, Open Systems Interconnection model, such that a data packet, being an IPv6 data packet and being received by the network node (101) from a further network node (102) of the plurality of network nodes (101, 102, 103), is

   -- either rejected,
   -- or routed and/or forwarded and/or switched to a third network node (103) of the plurality of network nodes (101, 102, 103) of the telecommunications network (100),

   wherein the method comprises at least the following step:
   transmitting, as part of a configuration process of the network node (101), routing address information (200) comprising source address information and/or destination address information, and wherein the routing address information (200) is, at least partly, defined based on an address information (210) and a bit mask (310), the bit mask (310) defining at least a first relevant binary digit (311) of the routing address information (200) and/or the address information (210), and a second relevant binary digit (312) of the routing address information (200) and/or the address information (210) such that the first and second relevant binary digits (311, 312) of the bit mask (310) are separated - within the bit mask (310) - by at least one non-relevant binary digit of the bit mask (310).

2. Method according to claim 1, wherein the routing and/or forwarding and/or switching operation of the network node (101) is configurable by means of modifying the at least first and second relevant binary digits (311, 312) of the bit mask (310).

3. Method according to one of the preceding claims, wherein the at least first and second relevant binary digits (311, 312) of the bit mask (310) refer to the leftmost 64 binary digits of the routing address information (200) and/or the address information (210), specifying at least one out of the following: a semantic indication, a type of traffic indication, a location indication, a topology indication, and a subscriber indication.

4. Method according to one of the preceding claims, wherein the routing address information (200) and/or the address information (210) comprises

   -- a first number of binary digits related to a type of traffic indication and/or
   -- a second number of binary digits related to a router area and/or
   -- a third number of binary digits related to a user or related to a port and/or
   -- a fourth number of binary digits related to a user sub-network,

   wherein the first and second binary digits (311, 312) are part of the first number of binary digits and/or of the second number of binary digits and/or of the third number of binary digits and/or of the fourth number of binary digits.

5. Method according to one of the preceding claims, wherein the first and second binary digits (311, 312) of the routing address information (200) and/or the address information (210) are part of the leftmost 64 bits of the routing address information (200) and/or the address information (210).

6. Telecommunications network (100) for configuring a network node (101) of the telecommunications network (100), wherein the telecommunications network (100) comprises a plurality of network nodes (101, 102, 103), wherein the telecommunications network (100) is an IP, Internet Protocol, packet data network, wherein the network node (101) provides a routing and/or forwarding and/or switching operation on the network layer, layer 3, according to the OSI model, Open Systems Interconnection model, such that a data packet, being an IPv6 data packet and being received by the network node (101) from a further network node (102) of the plurality of network nodes (101, 102, 103), is

   -- either rejected,
   -- or routed and/or forwarded and/or switched to a third network node (103) of the plurality of network nodes (101, 102, 103) of the telecommunications network (100),

   wherein the telecommunications network (100) is configured such that routing address information (200) comprising source address information and/or destination address information is transmitted and/or stored in the network node (101) as part of a configuration information, wherein the routing address information (200) is, at least partly, defined based on an address information (210) and a bit mask (310), the bit mask (310) defining at least a first relevant binary digit (311) of the routing address information (200) and/or the address information (210), and a second relevant binary digit (312) of the routing address information (200) and/or the address information (210) such that the first and second relevant binary digits (311, 312) of the bit mask (310) are separated - within the bit mask (310) - by at least one non-relevant binary digit of the bit mask (310).

7. Telecommunications network (100) according to claim 6, wherein the network nodes (101, 102, 103) of the telecommunications network (100) are, at least partly, linked by optical data transmission lines.

8. Network node (101) of a telecommunications network (100), wherein the network node (101) is able to be configured by a method according to one of claims 1 to 5, wherein the telecommunications network (100) comprises a plurality of network nodes (101, 102, 103), wherein the telecommunications network (100) is an IP, Internet Protocol, packet data network, wherein the network node (101) provides a routing and/or forwarding and/or switching operation on the layer, layer 3, according to the OSI model, Open Systems Interconnection model, such that a data packet, being an IPv6 data packet and being received by the network node (101) from a further network node (102) of the plurality of network nodes (101, 102, 103), is

-- either rejected,
-- or routed and/or forwarded and/or switched to a third network node (103) of the plurality of network nodes (101, 102, 103) of the telecommunications network (100),

wherein the network node (101) is provided such that routing address information (200) comprising source address information and/or destination address information is transmitted and/or stored in the network node (101) as part of a configuration information, wherein the routing address information (200) is, at least partly, defined based on an address information (210) and a bit mask (310), the bit mask (310) defining at least a first relevant binary digit (311) of the routing address information (200) and/or the address information (210), and a second relevant binary digit (312) of the routing address information (200) and/or the address information (210) such that the first and second relevant binary digits (311, 312) of the bit mask (310) are separated - within the bit mask (310) - by at least one non-relevant binary digit of the bit mask (310).

9. Program comprising a computer readable program code which, when executed on a computer and/or on a network node (101) of a telecommunications network (100), causes the computer and/or the network node (101) of the telecommunications network (100) to perform a method according to one of claims 1 to 5.

10. Computer program product for configuring a network node (101) of telecommunications network (100), the computer program product comprising a computer program stored on a storage medium, the computer program comprising program code which, when executed on a computer and/or on a network node (101) of the telecommunications network (100), causes the computer and/or the network node (101) of the telecommunications network (100) to perform a method according to one of claims 1 to 5.

**Patentansprüche**

1. Verfahren zum Konfigurieren eines Netzknotens (101) eines Telekommunikationsnetzes (100), wobei das Telekommunikationsnetz (100) mehrere Netzknoten (101, 102, 103) umfasst, wobei das Telekommunikationsnetz (100) ein Internet Protocol (IP)-Paketdatennetz ist, wobei der Netzknoten (101) eine Routungs- und/oder Weiterleitungs-und/oder Vermittlungsoperation in der Netzwerkschicht (Layer 3) gemäß dem Open Systems Interconnection (OSI)-Modell bereitstellt, dergestalt, dass ein Datenpaket, das ein IPv6-Datenpaket ist und durch den Netzknoten (101) von einem weiteren Netzknoten (102) der mehreren Netzknoten (101, 102, 103) empfangen wird, entweder

- abgelehnt wird
- oder an einen dritten Netzknoten (103) der mehreren Netzknoten (101, 102, 103) des Telekommunikationsnetzes (100) geroutet und/oder weitergeleitet und/oder vermittelt wird,

wobei das Verfahren mindestens den folgenden Schritt umfasst:
Senden, als Teil eines Konfigurationsprozesses des Netzknotens (101), von Routungsadressinformationen (200), die Quellenadressinformationen und/oder Bestimmungsortadressinformationen umfassen, und wobei die Routungsadressinformationen (200) mindestens teilweise auf der Basis einer Adressinformation (210) und einer Bitmaske (310) definiert werden, wobei die Bitmaske (310) mindestens eine erste relevante binäre Ziffer (311) der Routungsadressinformationen (200) und/oder der Adressinformationen (210) und eine zweite relevante binäre Ziffer (312) der Routungsadressinformationen (200) und/oder der Adressinformationen (210) definiert, dergestalt, dass die ersten und zweiten relevanten binären Ziffern (311, 312) der Bitmaske (310) innerhalb der Bitmaske (310) durch mindestens eine nicht-relevante binäre Ziffer der Bitmaske (310) getrennt sind.

2.  Verfahren nach Anspruch 1, wobei die Routungs- und/oder Weiterleitungs- und/oder Vermittlungsoperation des Netzknotens (101) mittels Modifizieren der mindestens ersten und zweiten relevanten binären Ziffern (311, 312) der Bitmaske (310) konfiguriert werden kann.

3.  Verfahren nach einem der vorangehenden Ansprüche, wobei sich die mindestens ersten und zweiten relevanten binären Ziffern (311, 312) der Bitmaske (310) auf die äußerst-linken 64 binären Ziffern der Routungsadressinformationen (200) und/oder der Adressinformationen (210) beziehen und mindestens eines von Folgendem spezifizieren: einen semantischen Hinweis, eine Art von Verkehrshinweis, einen Positionshinweis, einen Topologiehinweis und einen Teilnehmerhinweis.

4.  Verfahren nach einem der vorangehenden Ansprüche, wobei die Routungsadressinformationen (200) und/oder die Adressinformationen (210) Folgendes umfassen:

    - eine erste Anzahl binärer Ziffern, die mit einer Art von Verkehrshinweis in Beziehung stehen, und/oder
    - eine zweite Anzahl binärer Ziffern, die mit einem Routerbereich in Beziehung stehen, und/oder
    - eine dritte Anzahl binärer Ziffern, die mit einem Nutzer in Beziehung stehen oder mit einem Port in Beziehung stehen, und/oder
    - eine vierte Anzahl binärer Ziffern, die mit einem Nutzer-Subnetz in Beziehung stehen,

    wobei die ersten und zweiten binären Ziffern (311, 312) Teil der ersten Anzahl binärer Ziffern und/oder der zweiten Anzahl binärer Ziffern und/oder der dritten Anzahl binärer Ziffern und/oder der vierten Anzahl binärer Ziffern sind.

5.  Verfahren nach einem der vorangehenden Ansprüche, wobei die ersten und zweiten binären Ziffern (311, 312) der Routungsadressinformationen (200) und/oder der Adressinformationen (210) Teil der äußerst-linken 64 Bits der Routungsadressinformationen (200) und/oder der Adressinformationen (210) sind.

6.  Telekommunikationsnetz (100) zum Konfigurieren eines Netzknotens (101) des Telekommunikationsnetzes (100), wobei das Telekommunikationsnetz (100) mehrere Netzknoten (101, 102, 103) umfasst, wobei das Telekommunikationsnetz (100) ein Internet Protocol (IP)-Paketdatennetz ist, wobei der Netzknoten (101) eine Routungs- und/oder Weiterleitungs- und/oder Vermittlungsoperation in der Netzwerkschicht (Layer 3) gemäß dem Open Systems Interconnection (OSI)-Modell bereitstellt, dergestalt, dass ein Datenpaket, das ein IPv6-Datenpaket ist und durch den Netzknoten (101) von einem weiteren Netzknoten (102) der mehreren Netzknoten (101, 102, 103) empfangen wird, entweder

    - abgelehnt wird
    - oder an einen dritten Netzknoten (103) der mehreren Netzknoten (101, 102, 103) des Telekommunikationsnetzes (100) geroutet und/oder weitergeleitet und/oder vermittelt wird,

    wobei das Telekommunikationsnetz (100) so konfiguriert ist, dass Routungsadressinformationen (200), die QuellenAdressinformationen und/oder Bestimmungsort Adressinformationen umfassen, gesendet und/oder in dem Netzknoten (101) als Teil einer Konfigurationsinformation gespeichert werden, wobei die Routungsadressinformationen (200) mindestens teilweise auf der Basis einer Adressinformation (210) und einer Bitmaske (310) definiert werden, wobei die Bitmaske (310) mindestens eine erste relevante binäre Ziffer (311) der Routungsadressinformationen (200) und/oder der Adressinformationen (210) und eine zweite relevante binäre Ziffer (312) der Routungsadressinformationen (200) und/oder der Adressinformationen (210) definiert, dergestalt, dass die ersten und zweiten relevanten binären Ziffern (311, 312) der Bitmaske (310) innerhalb der Bitmaske (310) durch mindestens eine nicht-relevante binäre Ziffer der Bitmaske (310) getrennt sind.

7.  Telekommunikationsnetz (100) nach Anspruch 6, wobei die Netzknoten (101, 102, 103) des Telekommunikationsnetzes (100) mindestens teilweise durch optische Datenübertragungsleitungen verbunden sind.

8. Netzknoten (101) eines Telekommunikationsnetzes (100), wobei der Netzknoten (101) durch ein Verfahren nach einem der Ansprüche 1 bis 5 konfiguriert werden kann, wobei das Telekommunikationsnetz (100) mehrere Netzknoten (101, 102, 103) umfasst, wobei das Telekommunikationsnetz (100) ein Internet Protocol (IP)-Paketdatennetz ist, wobei der Netzknoten (101) eine Routungs- und/oder Weiterleitungs- und/oder Vermittlungsoperation in der Netzwerkschicht (Layer 3) gemäß dem Open Systems Interconnection (OSI)-Modell bereitstellt, dergestalt, dass ein Datenpaket, das ein IPv6-Datenpaket ist und durch den Netzknoten (101) von einem weiteren Netzknoten (102) der mehreren Netzknoten (101, 102, 103) empfangen wird, entweder

   - abgelehnt wird
   - oder an einen dritten Netzknoten (103) der mehreren Netzknoten (101, 102, 103) des Telekommunikationsnetzes (100) geroutet und/oder weitergeleitet und/oder vermittelt wird,

   wobei der Netzknoten (101) so ausgelegt ist, dass Routungsadressinformationen (200), die QuellenAdressinformationen und/oder Bestimmungsort Adressinformationen umfassen, gesendet und/oder in dem Netzknoten (101) als Teil einer Konfigurationsinformation gespeichert werden, wobei die Routungsadressinformationen (200) mindestens teilweise auf der Basis einer Adressinformation (210) und einer Bitmaske (310) definiert werden, wobei die Bitmaske (310) mindestens eine erste relevante binäre Ziffer (311) der Routungsadressinformationen (200) und/oder der Adressinformationen (210) und eine zweite relevante binäre Ziffer (312) der Routungsadressinformationen (200) und/oder der Adressinformationen (210) definiert, dergestalt, dass die ersten und zweiten relevanten binären Ziffern (311, 312) der Bitmaske (310) innerhalb der Bitmaske (310) durch mindestens eine nicht-relevante binäre Ziffer der Bitmaske (310) getrennt sind.

9. Programm, das einen computerlesbaren Programmcode umfasst, der, wenn er auf einem Computer und/oder auf einem Netzknoten (101) eines Telekommunikationsnetzes (100) ausgeführt wird, den Computer und/oder den Netzknoten (101) des Telekommunikationsnetzes (100) veranlasst, ein Verfahren nach einem der Ansprüche 1 bis 5 auszuführen.

10. Computerprogrammprodukt zum Konfigurieren eines Netzknotens (101) eines Telekommunikationsnetzes (100), wobei das Computerprogrammprodukt ein Computerprogramm umfasst, das auf einem Speichermedium gespeichert ist, wobei das Computerprogramm Programmcode umfasst, der, wenn er auf einem Computer und/oder auf einem Netzknoten (101) des Telekommunikationsnetzes (100) ausgeführt werden, den Computer und/oder den Netzknoten (101) des Telekommunikationsnetzes (100) veranlasst, ein Verfahren nach einem der Ansprüche 1 bis 5 auszuführen.

## Revendications

1. Procédé permettant de configurer un noeud de réseau (101) d'un réseau de télécommunications (100), dans lequel le réseau de télécommunications (100) comprend une pluralité de noeuds de réseau (101, 102, 103), dans lequel le réseau de télécommunications (100) est un réseau de données IP, *Internet Protocol,* dans lequel le noeud de réseau (101) assure une opération d'acheminement et/ou de retransmission et/ou de commutation sur la couche réseau, couche 3, selon le modèle OSI, modèle *Open Systems Interconnection* (interconnexion de systèmes ouverts), de telle sorte qu'un paquet de données qui est un paquet de données IPv6 et qui est reçu par le noeud de réseau (101), en provenance d'un autre noeud de réseau (102) de la pluralité de noeuds de réseau (101, 102, 103), est

   - soit rejeté,
   - soit acheminé et/ou retransmis et/ou commuté vers un troisième noeud de réseau (103) de la pluralité de noeuds de réseau (101, 102, 103) du réseau de télécommunications (100),

   dans lequel le procédé comprend au moins l'étape suivante :
   transmettre, dans le cadre d'un processus de configuration du noeud de réseau (101), des informations d'adresse d'acheminement (200) comprenant des informations d'adresse source et/ou des informations d'adresse de destination, et dans lequel les informations d'adresse d'acheminement (200) sont, au moins en partie, définies sur la base d'informations d'adresse (210) et d'un masque de bits (310), le masque de bits (310) définissant au moins un premier chiffre binaire pertinent (311) des informations d'adresse d'acheminement (200) et/ou des informations d'adresse (210), et un second chiffre binaire pertinent (312) des informations d'adresse d'acheminement (200) et/ou des informations d'adresse (210), de telle sorte que les premier et second chiffres binaires pertinents (311, 312) du masque de bits (310) sont séparés - au sein du masque de bits (310) - par au moins un chiffre binaire non pertinent du masque de bits (310).

2.  Procédé selon la revendication 1, dans lequel l'opération d'acheminement et/ou de retransmission et/ou de commutation du noeud de réseau (101) est configurable au moyen de la modification des au moins premier et second chiffres binaires pertinents (311, 312) du masque de bits (310).

3.  Procédé selon l'une des revendications précédentes, dans lequel les au moins premier et second chiffres binaires pertinents (311, 312) du masque de bits (310) se rapportent aux 64 chiffres binaires les plus significatifs des informations d'adresse d'acheminement (200) et/ou des informations d'adresse (210), donnant au moins l'une des indications suivantes : une indication sémantique, une indication de type de trafic, une indication d'emplacement, une indication de topologie et une indication d'abonné.

4.  Procédé selon l'une des revendications précédentes, dans lequel les informations d'adresse d'acheminement (200) et/ou les informations d'adresse (210) comprennent :

    - un premier nombre de chiffres binaires se rapportant à une indication de type de trafic et/ou
    - un deuxième nombre de chiffres binaires se rapportant à une zone de routeur et/ou
    - un troisième nombre de chiffres binaires se rapportant à un utilisateur ou se rapportant à un port et/ou
    - un quatrième nombre de chiffres binaires se rapportant à un sous-réseau d'utilisateur,

    dans lequel les premier et second chiffres binaires (311, 312) font partie du premier nombre de chiffres binaires et/ou du deuxième nombre de chiffres binaires et/ou du troisième nombre de chiffres binaires et/ou du quatrième nombre de chiffres binaires.

5.  Procédé selon l'une des revendications précédentes, dans lequel les premier et second chiffres binaires (311, 312) des informations d'adresse d'acheminement (200) et/ou des informations d'adresse (210) font partie des 64 bits les plus significatifs des informations d'adresse d'acheminement (200) et/ou des informations d'adresse (210).

6.  Réseau de télécommunications (100) permettant de configurer un noeud de réseau (101) du réseau de télécommunications (100), dans lequel le réseau de télécommunications (100) comprend une pluralité de noeuds de réseau (101, 102, 103), dans lequel le réseau de télécommunications (100) est un réseau de données par paquets IP, *Internet Protocol,* dans lequel le noeud de réseau (101) assure une opération d'acheminement et/ou de retransmission et/ou de commutation sur la couche réseau, couche 3, selon le modèle OSI, modèle *Open Systems Interconnection,* de telle sorte qu'un paquet de données qui est un paquet de données IPv6 et qui est reçu par le noeud de réseau (101), en provenance d'un autre noeud de réseau (102) de la pluralité de noeuds de réseau (101, 102, 103), est

    - soit rejeté,
    - soit acheminé et/ou retransmis et/ou commuté vers un troisième noeud de réseau (103) de la pluralité de noeuds de réseau (101, 102, 103) du réseau de télécommunications (100),

    dans lequel le réseau de télécommunications (100) est configuré de manière que des informations d'adresse d'acheminement (200) comprenant des informations d'adresse source et/ou des informations d'adresse de destination soient transmises et/ou stockées dans le noeud de réseau (101) en tant que partie d'informations de configuration, dans lequel les informations d'adresse d'acheminement (200) sont au moins en partie définies sur la base d'informations d'adresse (210) et d'un masque de bits (310), le masque de bits (310) définissant au moins un premier chiffre binaire pertinent (311) des informations d'adresse d'acheminement (200) et/ou des informations d'adresse (210), et un second chiffre binaire pertinent (312) des informations d'adresse d'acheminement (200) et/ou des informations d'adresse (210), de telle sorte que les premier et second chiffres binaires pertinents (311, 312) du masque de bits (310) sont séparés - au sein du masque de bits (310) - par au moins un chiffre binaire non pertinent du masque de bits (310).

7.  Réseau de télécommunication (100) selon la revendication 6, dans lequel les noeuds de réseau (101, 102, 103) du réseau de télécommunications (100) sont, en moins en partie, connectés par des lignes de transmission optique de données.

8.  Noeud de réseau (101) d'un réseau de télécommunications (100), dans lequel le noeud de réseau (101) est apte à être configuré au moyen d'un procédé selon l'une des revendications 1 à 5, dans lequel le réseau de télécommunications (100) comprend une pluralité de noeuds de réseau (101, 102, 103), dans lequel le réseau de télécommunications (100) est un réseau de données par paquets IP, *Internet Protocol,* dans lequel le noeud de réseau (101) assure une opération d'acheminement et/ou de retransmission et/ou de commutation sur la couche réseau, couche 3, selon le modèle OSI, modèle *Open Systems Interconnection,* de telle sorte qu'un paquet de données qui est un paquet de données IPv6 et qui est reçu par le noeud de réseau (101), en provenance d'un autre noeud de réseau (102) de la pluralité de noeuds de réseau (101, 102, 103), est

- soit rejeté,
- soit acheminé et/ou retransmis et/ou commuté vers un troisième noeud de réseau (103) de la pluralité de noeuds de réseau (101, 102, 103) du réseau de télécommunications (100),

dans lequel le noeud de réseau (101) est conçu de manière que des informations d'adresse d'acheminement (200) comprenant des informations d'adresse source et/ou des informations d'adresse de destination soient transmises et/ou stockées dans le noeud de réseau (101) en tant que partie d'informations de configuration, dans lequel les informations d'adresse d'acheminement (200) sont, au moins en partie, définies sur la base d'informations d'adresse (210) et d'un masque de bits (310), le masque de bits (310) définissant au moins un premier chiffre binaire pertinent (311) des informations d'adresse d'acheminement (200) et/ou des informations d'adresse (210), et un second chiffre binaire pertinent (312) des informations d'adresse d'acheminement (200) et/ou des informations d'adresse (210), de telle sorte que les premier et second chiffres binaires pertinents (311, 312) du masque de bits (310) sont séparés - au sein du masque de bits (310) - par au moins un chiffre binaire non pertinent du masque de bits (310).

9. Programme comprenant un code de programme lisible par ordinateur qui, lorsqu'il est exécuté sur un ordinateur ou sur un noeud de réseau (101) d'un réseau de télécommunications (100), fait mettre en oeuvre à l'ordinateur et/ou au noeud de réseau (101) du réseau de télécommunications (100) un procédé selon l'une des revendications 1 à 5.

10. Produit-programme informatique destiné à configurer un noeud de réseau (101) du réseau de télécommunications (100), le produit-programme informatique comprenant un programme informatique stocké sur un support de stockage, le programme informatique comprenant un code de programme qui, lorsqu'il est exécuté sur un ordinateur et/ou sur un noeud de réseau (101) du réseau de télécommunications (100), fait mettre en oeuvre à l'ordinateur et/ou au noeud de réseau (101) du réseau de télécommunications (100) un procédé selon l'une des revendications 1 à 5.

**100**

**101**

**102**

**103**

**Fig. 1**

**101**

**200**

**Fig. 2**

**210**

**310**

| 0 | 0 | 0 | 0 | 0 | 1 | 0 | 0 | 0 | 0 | 0 | 0 | 0 | 1 |

**311**     **312**

**Fig. 3**